(19) Europäisches Patentamt
European Patent Office
Office européen des brevets

(11) **EP 1 331 111 A2**

(12) **EUROPÄISCHE PATENTANMELDUNG**

(43) Veröffentlichungstag:
**30.07.2003 Patentblatt 2003/31**

(51) Int Cl.⁷: **B60G 17/08**, B60G 17/015,
F16F 9/46

(21) Anmeldenummer: **02025961.0**

(22) Anmeldetag: **21.11.2002**

(84) Benannte Vertragsstaaten:
**AT BE BG CH CY CZ DE DK EE ES FI FR GB GR
IE IT LI LU MC NL PT SE SK TR**
Benannte Erstreckungsstaaten:
**AL LT LV MK RO SI**

(30) Priorität: **29.01.2002 DE 10203554**

(71) Anmelder: **Continental Aktiengesellschaft
30165 Hannover (DE)**

(72) Erfinder:
• **Stiller, Alexander, Dr.
30823 Garbsen (DE)**
• **Kock, Jörg
30938 Burgwedel (DE)**
• **Treder, Christian
31535 Mandelsloh (DE)**
• **Zoufal, Stefan
30926 Dedensen (DE)**

(54) **Verstellbarer Dämpfer für ein Kraftfahrzeug**

(57) Bei herkömmlich - insbesondere nach dem Skyhookverfahren - verstellbaren Dämpfern (8) erfolgt der Übergang von einer hohen auf eine niedrige Dämpfkraft und umgekehrt sprunghaft. Aufgrund hoher Kraftgradienten in der Dämpferbewegung entstehen auffällige Poltergeräusche, die für die Fahrzeuginsassen sehr unangenehm sind.

Ein verstellbarer Dämpfer (8) weist eine Dämpfkraftänderungseinrichtung (16) auf, (zur Steuerung oder Regelung der Dämpfkraft eines Schwingungsdämpfers (8) in einer Fahrzeugradaufhängung), die auf Eingangs-steuersignale hin die Dämpfkraftcharakteristik des Dämpfers kontinuierlich einstellt. Ein erstes Signal wird durch ein erstes Mittel (10) erzeugt, welche die Dämpfkraftbewegung repräsentiert. Mindestens ein zweites Signal wird durch mindestens ein zweites Mittel (10a, ...) erzeugt, welches die vertikale Aufbaugeschwindigkeit ($V_A$, 12) der gefederten Radmasse (4a, ...) und/oder die Fahrgeschwindigkeit (20) repräsentiert. Darauf basierend wird ein Steuersignal (18) zur Verstellung der Dämpfkraftcharakteristik nach einem Regelgesetz in der Weise berechnet, dass die Änderung des Sollstroms über die Zeit begrenzbar ist.

Fig. 1

## Beschreibung

### Anwendungsgebiet

Gemäß dem Oberbegriff des Anspruchs 1 betrifft die Erfindung ein Verfahren - insbesondere ein Skyhookverfahren - zur Steuerung oder Regelung der Dämpfkraft eines Schwingungsdämpfers in einer Fahrzeugradaufhängung. Außerdem betrifft die Erfindung einen verstellbaren Schwingungsdämpfer gemäß dem Oberbegriff des Anspruchs 4.

### Stand der Technik

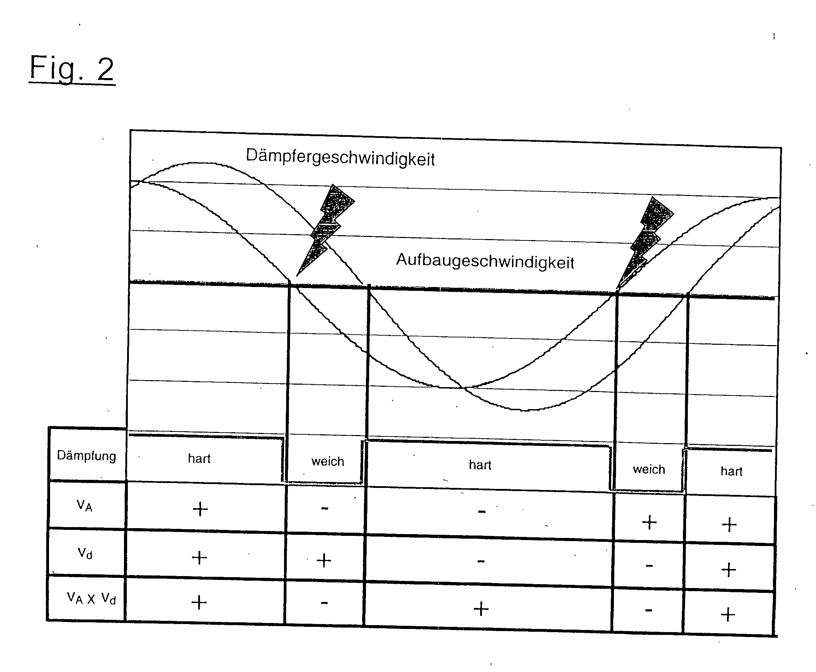

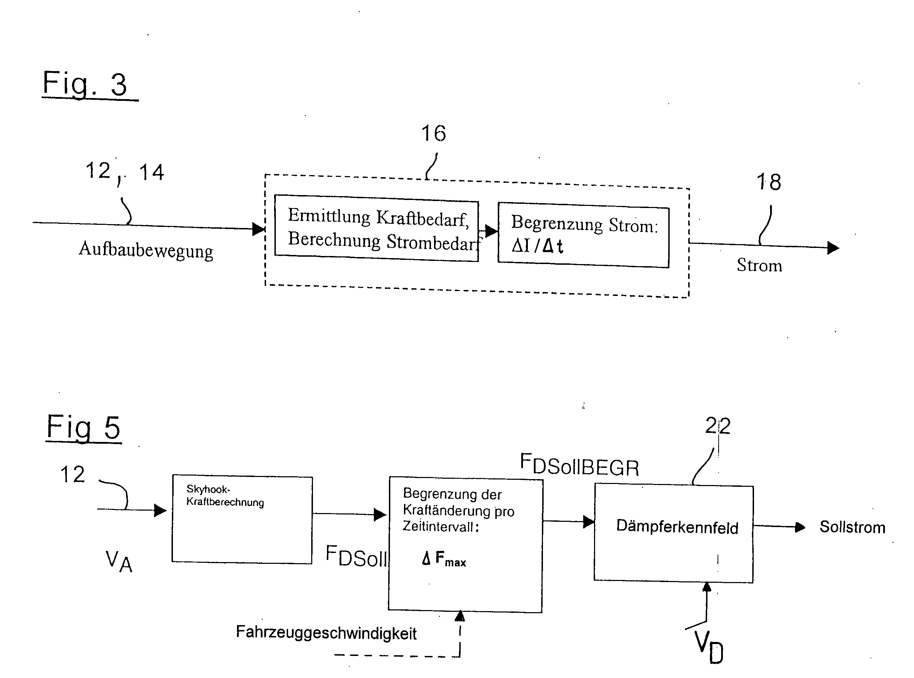

Die Regelung von semiaktiven Dämpfern mit Hilfe des Skyhookverfahrens ist Stand der Technik. Im Skyhookverfahren wird eine Solldämpfung berechnet, die proportional der Aufbaugeschwindigkeit ist. Aus der Solldämpfkraft und der ermittelten Dämpfergeschwindigkeit wird dann, bei gleichen Vorzeichen von Dämpfergeschwindigkeit und Solldämpfkraft, die Solldämpfkraft mit Hilfe eines inversen Dämpferkennfeldes in einen Sollstrom umerechnet.. Bei unterschiedlichen Vorzeichen von Solldämpfkraft und Dämpfergeschwindigkeit hingegen wird eine Solldämpfkraft gefordert, die der kleinst möglichen einstellbaren Dämpfkraft entspricht. Bei dem Standard-Skyhookverfahren erfolgt der Übergang von einer hohen auf eine niedrige Dämpfkraft und umgekehrt sprunghaft. Aufgrund hoher Kraftgradienten in der Dämpferbewegung entstehen auffällige Poltergeräusche, die für die Fahrzeuginsassen sehr unangenehm sind und somit den Fahrkomfort erheblich beeinträchtigen. Insbesondere verursachen diejenigen Schaltvorgänge Geräusche, bei denen bei einer Dämpfergeschwindigkeit ungleich Null geschaltet wird (siehe Fig. 2).
Derzeit wird bei elektrisch verstellbaren Dämpfern diesen Poltergeräuschen entgegengetreten, indem im Steuergerät eine maximal zulässige Stromänderung pro Zeiteinheit vorgegeben wird. (siehe Fig. 3). Dadurch wird auch die hydraulische Kraftänderung im Dämpfer beeinflusst.
Nachteil: Bei langsamer Fahrt sind störende Geräusche aufgrund fehlender
Nebengeräusche (Abroll-, Wind- und Motorgeräusche) deutlich auffälliger als bei schneller Fahrt. Die Geschwindigkeit des Fahrzeugs wird aber bisher in keiner Weise berücksichtigt.
Folgender Zielkonflikt bleibt bei der bisherigen Umsetzung erhalten: Akustisch optimal wäre eine sehr geringe Kraftänderung pro Zeit, aber dadurch wird die Dynamik der Regelvorgänge stark begrenzt. Der Vorteil der verstellbaren Dämpfer verringert sich stark.

### Aufgabe, Lösung und Vorteile der Erfindung

Durch Modifikation des Dämpferreglers soll erreicht werden, dass die Dämpferschaltgeräusche, die bei dem Standard-Skyhookverfahren entstehen, variabel reduziert werden können.
Ebenfalls sollen die bei der Verstellung von kontinuierlich verstellbaren Stoßdämpfern hervorgerufenen Geräusche unterdrückt werden.
Aufgrund einer erfindungsgemäßen Begrenzung der zeitlichen Änderung (d. h. der Änderungsgeschwindigkeit) der Dämpfkraft und/oder des Dämpferstroms wird eine Geräuschentwicklung durch Schaltvorgänge am Dämpfer verhindert.
Die Begrenzung der Stromänderung (und damit indirekt der Kraftänderung im Dämpfer) erfolgt erfindungsgemäß kontinuierlich in Abhängigkeit von der Fahrgeschwindigkeit des Fahrzeugs. Es wird ein an die speziellen Fahrzeuggegebenheiten applizierbares zweidimensionales Kennfeld definiert, in welchem die maximal zulässige Dämpfkraftänderung und/oder Strömänderung über der Fahrgeschwindigkeit vorgegeben wird.
Dadurch kann man bei langsamer Fahrt (wo kein hoher Dämpfkraftbedarf und damit auch keine hohe Reglerdynamik erforderlich ist) das Fahrzeug akustisch optimal abstimmen und bei hoher Fahrgeschwindigkeit (wo die akustischen Ansprüche aufgrund der hohen Nebengeräusche eher zweitrangig sind) eine hohe Regeldynamik erhalten.
Akustische Vorteile der oben angeführten Lösung ergeben sich besonders bei Dämpferregelungen nach dem Skyhook-Prinzip. Die mit der abrupten Umschaltung der Dämpfercharakteristik (Kraftsprung) erzeugten Geräusche können insbesondere bei niedrigen Fahrgeschwindigkeiten verringert werden.
Bei reiner Beeinflussung der Dämpferstromänderung kann eine Nichtlinearität der Dämpferstrom/Dämpferkraft-Kennlinie nicht berücksichtigt werden.

### Zeichnungen

Die Erfindung wird anhand zweier Ausführungsbeispiele in den Zeichnungen dargestellt und in der nachfolgenden Beschreibung näher erläutert. Es zeigt:

Fig. 1 den Prinzipaufbau Fahrzeug/Steuergerät/Dämpfer;
Fig. 2 das Prinzip der herkömmlichen Skyhook-Regelung;
Fig. 3 das Prinzip der Strombegrenzung bei verstellbaren Dämpfern gemäß dem Stand der Technik;
Fig. 4, Fig. 5 und Fig. 6 drei alternative Prinzipien erfindungsgemäßer Strombegrenzung; und

**Beschreibung der Erfindung**

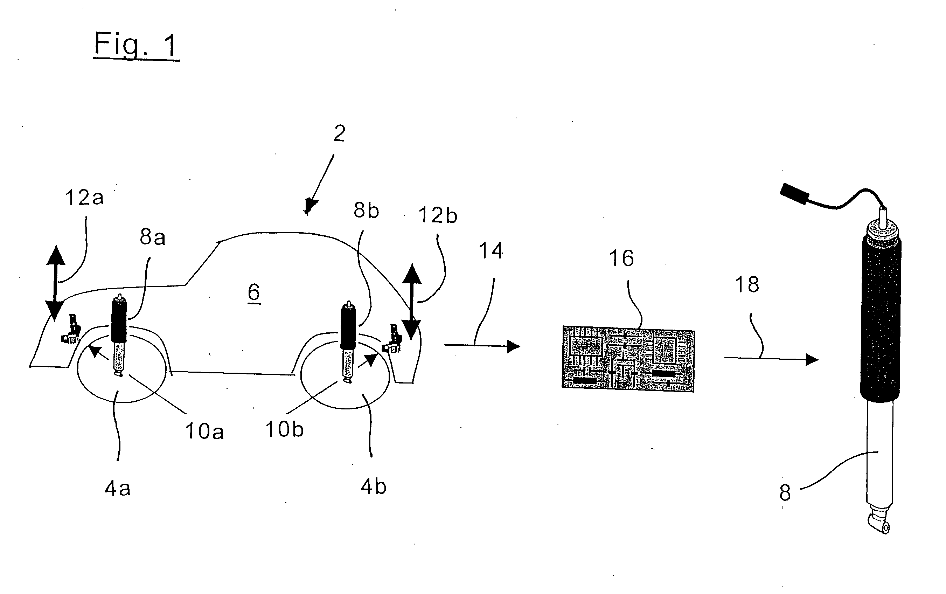

Die Fig. 1 zeigt ein Kraftfahrzeug 2, wobei zwischen den Rädern 4a, 4b, ...bzw. den Achsen und dem Aufbau 6 jeweils ein Stoßdämpfer 8, 8a, 8b, ... angeordnet ist. Der Aufbau ist mit Sensoren 10, 10a, 10b, ... zur Bestimmung der Aufbaugeschwindigkeit $V_A$, 12a, 12b ausgestattet. Ebenfalls durch Sensoren wird die Relativbewegung Rad zu Aufbau zwecks Bestimmung der Stoßdämpfergeschwindigkeit überwacht. Die von den Sensoren 10a, 10b, ... detektierten Signale 14 werden einem elektronischen Steuergerät 16 zugeleitet, wo sie aufbereitet (Steuersignal, 18) und den elektrisch verstellbaren Dämpfern 8, 8a, 8b, ... zugeleitet werden.

Eine in dem Steuergerät 16 durchzuführende Maßnahme erfolgt entweder durch eine Begrenzung des Stromes I (Stand der Technik) bzw. durch eine Begrenzung der Änderung des Stromes pro Zeiteinheit dI/dt (Fig. 3) (hierdurch werden sprunghafte Änderungen der Dampfkraft, die über den Strom eingestellt wird, und eine dadurch hervorgerufene unerwünschte Geräuschentwicklung unterdrückt) oder gemäß dem Standard-Skyhookverfahren durch eine Umschaltung der Dämpfung von "hart" auf "weich", wenn sich Dämpfergeschwindigkeit und Aufbaugeschwindigkeit $V_A$, 12a, ... in ihren Vorzeichen voneinander unterscheiden (Fig. 2).

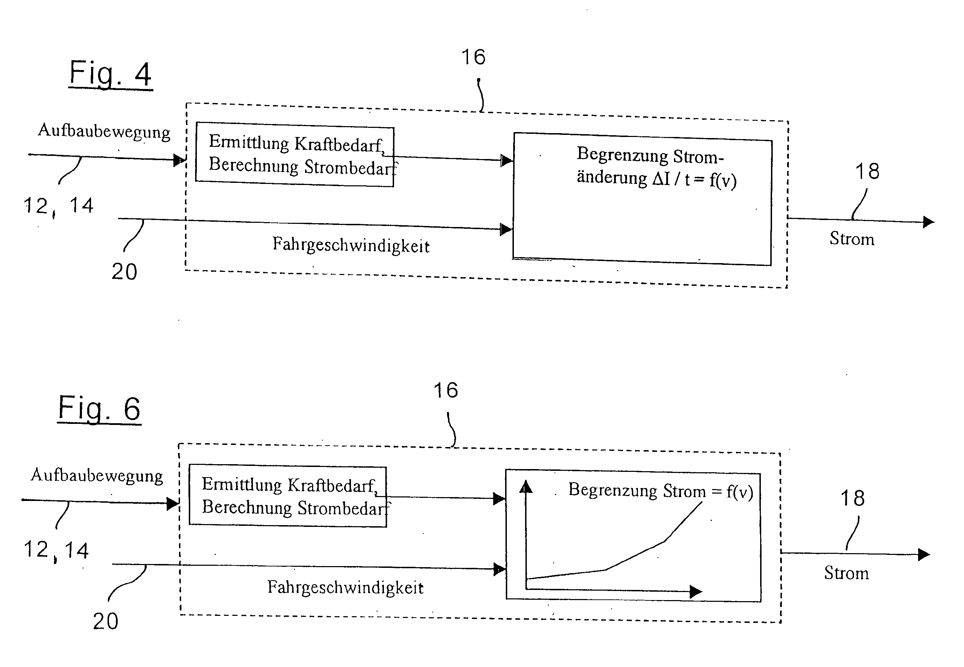

Die Fig. 4, Fig. 5 und Fig. 6 zeigen nun drei verschiedene Alternativen erfindungsgemäßer Weiterentwicklungen.
Und zwar erfolgt gemäß Fig. 4 eine Begrenzung der Stromänderung pro Zeitintervall des Dämpfers 8 unter Berücksichtigung der Fahrzeuggeschwindigkeit 20.
Eine Berücksichtigung der Fahrzeuggeschwindigkeit 20 kann z.B. dahingehend vorgenommen werden, dass bei niedrigen Fahrzeuggeschwindigkeiten nur eine geringe Änderung des Stromes pro Zeiteinheit zugelassen wird, indem eine niedrige Begrenzung für die Stromänderung für niedrige Gechwindigkeiten vorgegeben wrd, und dass bei höheren Fahrzeuggeschwindigkeiten eine höhere Änderung des Stromes pro Zeiteinheit zugelassen wird, indem eine höhere Begrenzung für die Stromänderung für diese höheren Geschwindigkeiten vorgegeben wird. Dieser Regelung liegt der Gedanke zu Grunde, dass bei niedrigen Fahrzeuggeschwindigkeiten eine hohe Stromänderung und damit eine hohe Änderung der Dämpfungskraft nicht benötigt wird und dass bei niedrigen Fahrzeuggeschwindigkeiten störende Geräusche besonders zu vermeiden sind, da der Fahrer diese stärker wahrnehmen würde.

Die Fig. 5 zeigt eine erfindungsgemäße Weiterentwicklung des Standard-Skyhookverfahrens, wobei bei im Vorzeichen unterschiedlichen Dämpfer- und Aufbaugeschwindigkeiten $V_A$, 12a, ... eine Begrenzung der Kraftänderung pro Zeiteinheit erfolgt.
D. h.: Das erfindungsgemäße Verfahren begrenzt die Höhe der möglichen, mittels eines Dämpfkraftstellgliedes 22 auf den Dämpfer 8 ausgeübten Kraftänderung über die Zeit, mit

$$\Delta F_{DSOLLBEGR} (t) = F_{DSOLLBEGR} (t-1) + \Delta F(t)$$

wobei gilt:

$$\Delta F(t) = F_{DSOLLBEGR} (t-1), \text{ wenn } F_{DSOLL} (t) - F_{DSOLLBEGR} (t-1) < \Delta F_{max}$$

$$\Delta F(t) = \Delta F_{max}, \text{ wenn } F_{DSOLL} (t) - F_{DSOLLBEGR} (t-1) > \Delta F_{max}$$

$$\Delta F(t) = -\Delta F_{max}, \text{ wenn } F_{DSOLL} (t) - F_{DSOLLBEGR} (t-1) < -\Delta F_{max}$$

mit t = Abtastzeit des Dämpferreglers.

Das Steuergerät 16 (s. Fig. 1) gibt eine $F_{DSOLLBEGR}$ (t) vor, die sich von einer zuvor vorgegebenen $F_{DSOLLBEGR}$ (t-1) maximal um $\Delta F_{max}$ unterscheidet. Dadurch werden starke Sprünge in der Vorgabe der Solldämpferkraft $F_{DSOLL}$ (t) vermieden. Die von dem Steuergerät berechnete $F_{DSOLLBEGR}$ (t) wird unter Berücksichtigung der aktuellen Dämpfergeschwindigkeit mit Hilfe eines Dämpferkennfeldes, in dem der Sollstrom in Abhängigkeit von Dämpferkraft und Dämpfergeschwindigkeit abgespeichert ist, in einen Dämpfersollstrom umgerechnet. Der ermittelte Dämpfersollstrom wird am Dämpfer eingestellt. Eine Begrenzung der Änderung der Solldämpferkraft hat den Vorteil, dass darüber direkt die Höhe der Dämpferkraftänderung vorgegeben wird.

Das in der Fig. 5 gezeigte $\Delta F_{max}$ kann, genau wie der Begrenzung der Stromänderung pro Zeit, in Abhängigkeit von der Fahrzeuggeschwindigkeit vorgegeben werden. Auch hier kann eine Berücksichtigung der Fahrzeuggeschwindigkeit dahingehend vorgenommen werden, dass bei niedrigen Fahrzeuggeschwindigkeiten nur eine niedrige $\Delta F_{max}$ zugelassen wird, und bei höheren Fahrzeuggeschwindigkeiten ein höheres $\Delta F_{max}$ zugelassen wird. Dieser Regelung liegt der gleiche Gedanke zu Grunde, wie er oben im Zusammenhang mit der Stromänderung erläutert wird.

Gemäß Fig. 6 erfolgt eine Begrenzung des Stroms zur Beaufschlagung des Dämpfers 8 unter Berücksichtigung der Fahrzeuggeschwindigkeit 20.

Wenn der Dämpfer z.B. ein Ventil enthält, das bei einem hohen Strom eine hohe Dämpfung und bei einem niedrigen Strom eine niedrige Dämpfung einstellt, bedeutet eine Begrenzung des Stromes auf einen Wert, der nicht überschritten werden darf (obere Grenze), dass das Maximum der einstellbaren Dämpfkraft begrenzt bzw. reduziert (wenn die obere Grenze reduziert wird) wird. Andererseits bedeutet eine Begrenzung des Stromes auf einen Wert, der nicht unterschritten werden darf (untere Grenze), dass das Minimum der einstellbaren Dämpfkraft begrenzt bzw. angehoben wird (wenn die untere Grenze angehoben wird). Durch die Begrenzung des Stromes in beide Richtungen wird also eine maximale Härte und Weichheit des Dämpfers vorgegeben. Bei niedrigen Fahrzeuggeschwindigkeiten wird der Dämpfer vorzugsweise auf weich (d.h. die obere Grenze wird stark abgesenkt) und bei hohen Fahrzeuggeschwindigkeiten vorzugsweise auf hart eingestellt (d.h. die untere Grenze wird stark angehoben).

Statt elektrisch, wie in den Ausführungsbeispielen dargestellt, kann die erfindungsgemäße Dämpfkraftsteuerung auch pneumatisch oder sonstwie mechanisch erfolgen.

**Bezugszeichenliste**
(ist Teil der Beschreibung)

| | |
|---|---|
| 2 | Kraftfahrzeug |
| 4a, 4b, | (Fahrzeug-)Räder, Radmasse |
| 6 | (Fahrzeug-)Aufbau |
| 8, 8a, 8b | (Stoß-)Dämpfer |
| 10, 10a, 10b, | Sensoren, Mittel |
| 12, 12a, 12b, | Aufbaugeschwindigkeit $V_A$ |
| 14 | Sensorsignal |
| 16 | elektrisches Steuergerät, Dämpfkraftänderungseinrichtung |
| 18 | Steuersignal |
| 20 | Fahr(zeug)geschwindigkeit |
| 22 | Dämpfkraftstellglied, Stromstellglied |

**Patentansprüche**

1. Verfahren zur Steuerung oder Regelung der Dämpfkraft für einen (8) oder mehrere Schwingungsdämpfer (8a, 8b, ...) einer zwischen Fahrzeugrädern (4a, 4b, ...) und Fahrzeugaufbau (6) angeordneten Fahrzeugradaufhängung

   - mit einer Dämpfkraftänderungseinrichtung, die auf Eingangssteuersignale hin die Dämpfkraftcharakteristik des Dämpfers kontinuierlich einstellt,
   - wobei erste Signale durch Mittel erzeugt werden, welche die Dämpferbewegung repräsentieren, und
   - wobei zweite Signale durch Mittel erzeugt werden, welche die vertikale Aufbaugeschwindigkeit der gefederten Radmasse repräsentieren
   - und darauf basierend eine Solldämpfkraft und ein davon abhängiger Sollstrom zur Verstellung der Dämpfkraftcharakteristik nach einem Regelgesetz berechnet wird,

   **dadurch gekennzeichnet,**
   **dass** die Änderung des Sollstroms und/oder die Änderung der Solldämpfkraft über die Zeit begrenzt wird.

2. Verfahren nach Anspruch 1,
   **dadurch gekennzeichnet,**
   **dass** das verwendete Regelgesetz das Skyhook-Verfahren ist.

3. Verfahren nach Anspruch 1 oder 2,
**dadurch gekennzeichnet,**
**dass** eine Begrenzung der zeitlichen Änderung der Solldämpfkraft und/oder des Dämpferstroms in Abhängigkeit von der Fahrzeuggeschwindigkeit vorgenommen wird.

4. Verfahren nach einem der Ansprüche 1 bis 3,
**dadurch gekennzeichnet,**
**dass** bei unterschiedlichen Vorzeichen von Dämpfergeschwindigkeit und Aufbaugeschwindigkeit die zeitliche Änderung der Dämpfkraft und/oder des Dämpferstroms begrenzt wird.

5. Verfahren nach einem der Ansprüche 1 bis 4,
**dadurch gekennzeichnet,**
**dass** bei elektrisch verstellbarem Dämpfer (8), bei dem die Dämpfkraft über die Höhe eines Stromes verstellbar ist, ein Sollstrom für ein Stromstellglied aus einem gemessenen und abgespeicherten Kennfeld des Dämpfers ermittelt wird, indem aus der Solldämpfkraftvorgabe nach Anspruch 1 oder 2 und einer ermittelten Dämpfergeschwindigkeit aus dem Dämpferkennfeld der dazu notwendige Sollstrom durch Interpolation ermittelt wird.

6. Verstellbarer Dämpfer (8)

   - mit einer Dämpfkraftänderungseinrichtung (16), die auf Eingangssteuersignale hin die Dämpfkraftcharakteristik des Dämpfers (8) kontinuierlich einstellt,
   - wobei ein erstes Signal durch ein erstes Mittel (10) erzeugt wird, welches die Dämpferbewegung repräsentiert, und
   - wobei mindestens ein zweites Signal durch mindestens ein zweites Mittel (10a, ...) erzeugt wird, welches die vertikale Aufbaugeschwindigkeit ($V_A$, 12) der gefederten Radmasse (4a, ...) und/oder die Fahrzeuggeschwindigkeit (20) repräsentiert,
   - und dass darauf basierend ein Steuersignal (18) in Form einer Solldämpfkraft und eines davon abhängigen Sollstromes zur Verstellung der Dämpfkraftcharakteristik nach einem Regelgesetz berechnet wird,

   **dadurch gekennzeichnet,**
   **dass** die Änderung des Sollstroms und/oder die Änderung der Solldämpfkraft über die Zeit begrenzbar ist.

7. Verstellbarer Dämpfer nach Anspruch 6,
**dadurch gekennzeichnet,**

   - **dass** das erste (10) und das mindestens zweite Mittel (10a, ...) Mittel zur Erzeugung elektrischer Signale sind,
   - **dass** die Dämpfkraftänderungseinrichtung (16) ein elektrisches Steuergerät zur Erzeugung eines elektrischen Steuersignals (18) aufweist, und
   - **dass** der Dämpfer (8) ein Stromstellglied (22) zur Regelung der Solldämpfkraft mit Hilfe des elektrischen Steuersignals (18) aufweist.

Fig. 1

EP 1 331 111 A2

Fig. 2

| Dämpfung | weich | hart | weich | hart |
|---|---|---|---|---|
| $V_A$ | + | + | - | + |
| $V_d$ | + | + | + | - |
| $V_A \times V_d$ | + | + | - | - |

## Fig. 3

Aufbaubewegung → 12, 14

16 — Ermittlung Kraftbedarf, Berechnung Strombedarf → Begrenzung Strom: $\Delta I / \Delta t$ → 18 Strom

## Fig 5

12 → $V_A$ → Skyhook-Kraftberechnung → FDSoll → Begrenzung der Kraftänderung pro Zeitintervall: $\Delta F_{max}$ → FDSollBEGR → 22 Dämpferkennfeld → Sollstrom

Fahrzeuggeschwindigkeit

$V_D$

EP 1 331 111 A2

## Fig. 4

Aufbaubewegung

12, 14

20

| | Ermittlung Kraftbedarf, Berechnung Strombedarf |
| --- | --- |

16

Begrenzung Stromänderung $\Delta I / t = f(v)$

Fahrgeschwindigkeit

18

Strom

## Fig. 6

Aufbaubewegung

12, 14

20

Ermittlung Kraftbedarf, Berechnung Strombedarf

16

Begrenzung Strom = $f(v)$

Fahrgeschwindigkeit

18

Strom

EP 1 331 111 A2